# EUROPEAN PATENT APPLICATION

(11) **EP 2 381 144 A1**
(43) Date of publication of application: **26.10.2011**
(21) Application number: 10733460.9
(22) Date of filing: 19.01.2010
(51) Int. Cl.: F16J 15/18

(54) **SEAL RING**

(30) Priority: 20.01.2009 JP 2009010017; 20.01.2009 JP 2009010018
(71) Applicant: NOK Corporation, Minato-ku Tokyo 105-8585 (JP)
(72) Inventor: SEKI Kazunari, Kitaibaraki-shi Ibaraki 319-1535 (JP); KONDO Yosuke, Kitaibaraki-shi Ibaraki 319-1535 (JP); WATANABE Koji, Kitaibaraki-shi Ibaraki 319-1535 (JP)
(74) Representative: TBK
(86) International application number: PCT/JP2010/050547
(87) International publication number: WO 2010/084853

(57) **Abstract**

The invention provides a seal ring capable of stably leaking a sealed fluid from an inner peripheral face side.

In a seal ring in which an inter-side face leak passage S3 connecting a first space S1 and a second space S2 is provided to a fitted portion of a first protruding portion 10R1 fitted in a second recessed portion 10L2 and a fitted portion of a second protruding portion 10R2 fitted in a first recessed portion 10L2, a passage communicating with an inner peripheral face side and with the inter-side face leak passage is formed when an end portion on an inner peripheral side of one cut end portion 10R and an end portion on an inner peripheral side of the other cut end portion are in contact with each other.

## Description

### TECHNICAL FIELD

The present invention relates to a seal ring.

### BACKGROUND ART

There is a known seal ring mounted in an annular groove formed in a rotary shaft inserted into a shaft hole in a housing, coming into sliding contact with a side wall face on an unsealed fluid side of the annular groove, and coming into contact with an inner peripheral face of the shaft hole to seal an annular space between the rotary shaft and the shaft hole.

Such a seal ring is employed in various devices. A challenge in a seal ring used in a high-pressure and high-rotation environment is how to prevent degradation due to wear. Especially in a seal ring used for an AT or a CVT for an automobile in recent years, the seal ring needs to adapt to higher rotation because of increase in performance of the AT and the CVT.

As a technique for suppressing wear of the seal ring, there is a known one in which oil that is a sealed fluid is leaked purposely to a sliding face side to form an oil film on the sliding face to thereby exert a cooling effect.

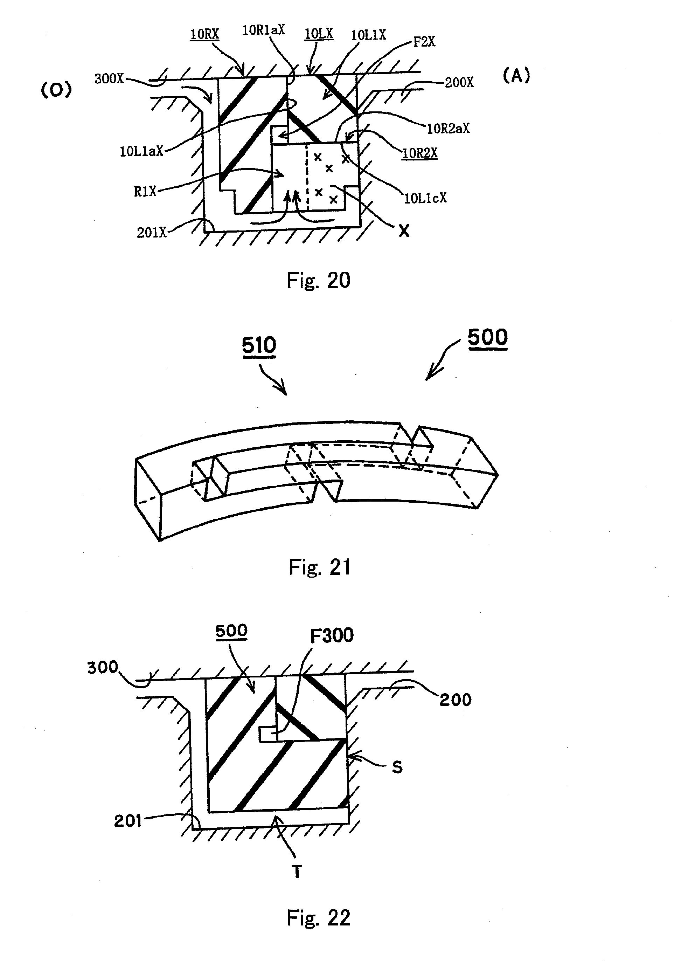

Such a prior-art seal ring will be described with reference to FIGS. 21 and 22. FIG. 21 is a perspective view showing an area around a cut portion (abutment joint) in the prior-art seal ring. FIG. 22 is a schematic sectional view showing a mounted state of the prior-art seal ring. The schematic sectional view in FIG. 22 is a sectional view at the cut portion (abutment joint) of the seal ring.

The seal ring is generally provided with the cut portion (abutment joint) at a portion in a circumferential direction in view of mountability. There are various types of structures of the cutting portion and a special step cut is known as a cut portion with which stable sealing performance can be obtained even if a circumferential length changes due to linear expansion according to change in environmental temperature. FIGS. 21 and 22 show the seal ring 500 having the cut portion 510 formed in the special step cut.

The seal ring 500 is mounted in an annular groove 201 formed in a rotary shaft 200 inserted into a shaft hole in a housing 300. The seal ring 500 is in sliding contact with a side wall face on an unsealed fluid side of the annular groove 201 (a portion shown by S in FIG. 22) and in contact with an inner peripheral face of the shaft hole to seal an annular space between the rotary shaft 200 and the shaft hole.

To purposely leak oil to the sliding face side, a flow path F300 is formed at a fitted portion between one cut end portion and the other cut end portion at the cut portion as shown in FIG. 22. Because the special step cut is employed, a sectional area of the flow path F300 hardly changes, even if the circumferential length of the seal ring 500 changes as the environmental temperature changes. Therefore, an amount of the leak is stable.

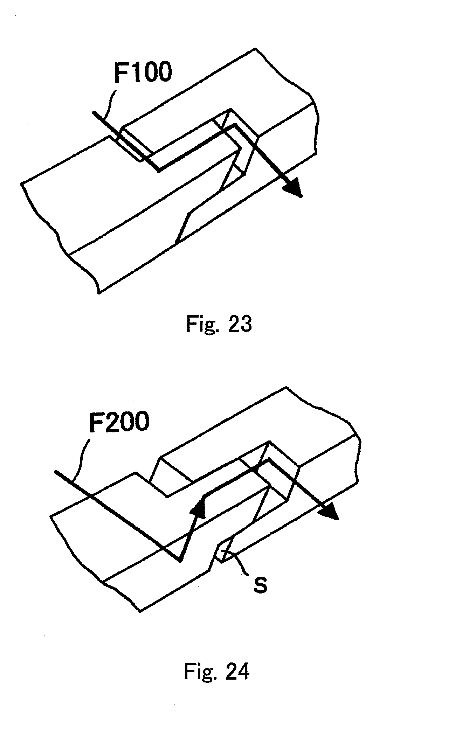

Here, the oil leaks mainly through a route F100 from one side face side (side face side on a sealed fluid side) of the seal ring to the other side face side (side face side on the unsealed fluid side) as shown in FIG. 23 in general.

However, temperature of a sliding portion S between the side wall face on the unsealed fluid side of the annular groove 201 and the seal ring 500 becomes high due to sliding friction. As a result, temperature of the sealed fluid in a vicinity of a space T near the sliding portion S and between the seal ring 500 and a groove bottom face of the annular groove 201 becomes high as well. Therefore, the high-temperature sealed fluid stays in the vicinity of the space T in the above-described route F100 from the one side face to the other side face to thereby reduce durability of the seal ring 500.

As shown in FIG. 24, there is also one in which a main route F200 is from an inner peripheral face side of a seal ring to the other side face side (side face side on an unsealed fluid side).

However, to form such a route F200, cut end portions need to be formed so as not to come in contact with each other both on the outer peripheral side and the inner peripheral side. Therefore, the cut end portions need to be designed so as not to come in contact with each other all the time in a range of the environmental temperature in which the seal ring is used and design flexibility disadvantageously is low.

Incidentally, the related art is disclosed in Patent Documents 1 to 3.

### PRIOR ART DOCUMENT

### PATENT DOCUMENT

Patent Document 1: Japanese Patent Application Laid-Open No. 2007-239954
Patent Document 2: Japanese Patent Application Laid-Open No. 8-135797
Patent Document 3: International Publication No. WO2003/078873

### DISCLOSURE OF THE INVENTION

### PROBLEMS TO BE SOLVED BY THE INVENTION

It is an object of the present invention to provide a seal ring capable of stably leaking a sealed fluid from an inner peripheral face side.

### MEANS FOR SOLVING THE PROBLEM

To achieve the above object, the invention employs the following means.

More specifically, there is provided a seal ring according to the present invention, mounted in an annular groove provided to a rotary shaft inserted into a shaft hole in a housing, coming in sliding contact with a side wall face on an unsealed fluid side of the annular groove, and coming in contact with an inner peripheral face of the shaft hole to seal an annular space between the rotary shaft and the shaft hole, a ring main body being provided with a cut portion where the ring main body is cut at a portion in a circumferential direction, one cut end portion of the cut portion being provided, on a one side face side on an outer peripheral side, with a first protruding portion and being provided, on the other side face side on the outer peripheral side, with a first recessed portion, the other cut end portion of the cut portion being provided, on the one side face side on the outer peripheral side, with a second recessed portion in which the first protruding portion is fitted and being provided, on the other side face side on the outer peripheral side, with a second protruding portion to be fitted in the first recessed portion, a first space serving as a flow path of a sealed fluid being secured on a tip end side in the circumferential direction of the first protruding portion when the first protruding portion is fitted in the second recessed portion, a second space serving as a flow path of the sealed fluid being secured on a tip end side in the circumferential direction of the second protruding portion when the second protruding portion is fitted in the first recessed portion, and an inter-side face leak passage connecting the first space and the second space being provided to a fitted portion of the first protruding portion fitted in the second recessed portion and a fitted portion of the second protruding portion fitted in the first recessed portion, wherein a passage communicating with an inner peripheral face side and with the inter-side face leak passage is formed when an end portion on an inner peripheral side of the one cut end portion and an end portion on the inner peripheral side of the other cut end portion are in contact with each other.

In the invention, "the cut portion" and "the cut end portions" are not limited to structures obtained by cutting. For example, they may be structures obtained by molding.

According to the invention, the passage communicating with the inner peripheral face side and with the inter-side face leak passage is formed even when a circumferential length increases due to linear expansion and the end portion on the inner peripheral side of the one cut end portion and the end portion on the inner peripheral side of the other cut end portion are in contact with each other. In this way, it is possible to leak the sealed fluid on the inner peripheral face side of a seal lip to the unsealed fluid side through a route from this passage to the first space or the second space via the inter-side face leak passage. As a result, it is possible to leak the sealed fluid near the sliding portion as compared with a case in which the sealed fluid leaks from the sealed fluid side to the unsealed fluid side and therefore, increase in temperature around the sliding portion can be suppressed.

Preferably, the one cut end portion is provided, on the one side face side on the inner peripheral side, with a third protruding portion, the other cut end portion is provided, on the other side face side on the inner peripheral side, with a fourth protruding portion, and a space is formed between the third protruding portion and the fourth protruding portion when the third protruding portion is in contact with an end face of the other cut end portion and the fourth protruding portion is in contact with an end face of the one cut end portion to thereby serve as a passage communicating with the connecting passage.

The inter-side face leak passage is preferably made up of a first chamfered portion formed at an edge portion of the first protruding portion corresponding to a corner portion of the second recessed portion and extending in the circumferential direction and a second chamfered portion formed at an edge portion of the second protruding portion corresponding to a corner portion of the first recessed portion and extending in the circumferential direction.

Further, there is provided another seal ring according to the present invention, mounted in an annular groove provided to a rotary shaft inserted into a shaft hole in a housing, coming in sliding contact with a side wall face on an unsealed fluid side of the annular groove, and coming in contact with an inner peripheral face of the shaft hole to seal an annular space between the rotary shaft and the shaft hole, a ring main body being provided with a cut portion where the ring main body is cut at a portion in a circumferential direction, one cut end portion of the cut portion being provided, on a one side face side on an outer peripheral side, with a first protruding portion and being provided, on the other side face side on the outer peripheral side, with a first recessed portion, the other cut end portion of the cut portion being provided, on the one side face side on the outer peripheral side, with a second recessed portion in which the first protruding portion is fitted and being provided, on the other side face side on the outer peripheral side, with a second protruding portion to be fitted in the first recessed portion, a first space serving as a flow path of a sealed fluid being secured on a tip end side in the circumferential direction of the first protruding portion when the first protruding portion is fitted in the second recessed portion, a second space serving as a flow path of the sealed fluid being secured on a tip end side in the circumferential direction of the second protruding portion when the second protruding portion is fitted in the first recessed portion, a first groove serving as a flow path of the sealed fluid and communicating with the second space is provided in a vicinity of a corner portion of the first recessed portion and extending in the circumferential direction, and a second groove serving as a flow path of the sealed fluid and communicating with the first space is provided in a vicinity of a corner portion of the second recessed portion and extending in the circumferential direction, wherein a passage communicating with an inner peripheral face side and with the first groove and the second groove is formed when an end portion on an inner peripheral side of the one cut end portion and an end portion on the inner peripheral side of the other cut end portion are in contact with each other.

Incidentally, in the invention, "the cut portion" and "the cut end portions" are not limited to structures obtained by cutting. For example, they may be structures obtained by molding.

According to the invention, the passage communicating with the inner peripheral face side and with the first groove and the second groove is formed even when a circumferential length increases due to linear expansion and the end portion on the inner peripheral side of the one cut end portion and the end portion on the inner peripheral side of the other cut end portion are in contact with each other. In this way, it is possible to leak the sealed fluid on the inner peripheral face side of the seal lip to the unsealed fluid side through a route from this passage to the second space via the first groove or a route from this passage to the first space via the second groove. As a result, it is possible to leak the sealed fluid near the sliding portion as compared with a case in which the sealed fluid leaks from the sealed fluid side to the unsealed fluid side and therefore, increase in temperature around the sliding portion can be suppressed.

Preferably, the one cut end portion is provided, on the one side face side on the inner peripheral side, with a third protruding portion, the other cut end portion is provided, on the other side face side on the inner peripheral side, with a fourth protruding portion, and a space is formed between the third protruding portion and the fourth protruding portion when the third protruding portion is in contact with an end face of the other cut end portion and the fourth protruding portion is in contact with an end face of the one cut end portion to thereby serve as a passage communicating with the first groove and the second groove.

### EFFECTS OF THE INVENTION

As described above, according to the invention, it is possible to stably leak the sealed fluid from the inner peripheral side.

### BRIEF DESCRIPTION OF THE DRAWINGS

FIG. 1 is a side view of a seal ring according to a first embodiment of the present invention.
FIG. 2 is a view of an outer peripheral face side of a cut portion of the seal ring according to the first embodiment of the invention.
FIG. 3 is a view of an inner peripheral face side of the cut portion of the seal ring according to the first embodiment of the invention.
FIG. 4 is a perspective view showing a state in which the cut portion of the seal ring according to the first embodiment of the invention is opened up.
FIG. 5 is a view of the outer peripheral face side in the state in which the cut portion of the seal ring according to the first embodiment of the invention is opened up.
FIG. 6 is a view of the inner peripheral face side in the state in which the cut portion of the seal ring according to the first embodiment of the invention is opened up.
FIG. 7 is a perspective view showing a cut end portion of the seal ring according to the first embodiment of the invention.
FIG. 8 is a perspective view showing an area around the cut portion of the seal ring according to the first embodiment of the invention.
FIG. 9 is a schematic sectional view showing a used state (mounted state) of the seal ring according to the first embodiment of the invention.
FIG. 10 is a schematic sectional view showing the used state (mounted state) of the seal ring according to the first embodiment of the invention.
FIG. 11 is a side view of a seal ring according to a second embodiment of the present invention.
FIG. 12 is a view of an outer peripheral face side of a cut portion of the seal ring according to the second embodiment of the invention.
FIG. 13 is a view of an inner peripheral face side of the cut portion of the seal ring according to the second embodiment of the invention.
FIG. 14 is a side view showing a state in which a cut portion of the seal ring according to the second embodiment of the invention is opened up.
FIG. 15 is a view of the outer peripheral face side in the state in which the cut portion of the seal ring according to the second embodiment of the invention is opened up.
FIG. 16 is a view of the inner peripheral face side in the state in which the cut portion of the seal ring according to the second embodiment of the invention is opened up.
FIG. 17 is a perspective view showing a cut end portion of the seal ring according to the second embodiment of the invention.
FIG. 18 is a perspective view showing an area around the cut portion of the seal ring according to the second embodiment of the invention.
FIG. 19 is a schematic sectional view showing a used state (mounted state) of the seal ring according to the second embodiment of the invention.
FIG. 20 is a schematic sectional view showing the used state (mounted state) of the seal ring according to the second embodiment of the invention.
FIG. 21 is a perspective view showing an area around a cut portion (abutment joint) of a prior-art seal ring.
FIG. 22 is a schematic sectional view showing a mounted state of the prior-art seal ring.
FIG. 23 is an explanatory view showing an example of a leak route in the seal ring.
FIG. 24 is an explanatory view showing an example of the leak route in the seal ring.

### MODES FOR CARRYING OUT THE INVENTION

Modes for carrying out the present invention will be described below in detail by using examples based on the embodiments with reference to the drawings. However, dimensions, material, shapes, relative positions of component parts described in the embodiments are not intended to limit the scope of the invention thereto unless otherwise specified.

### (First embodiment)

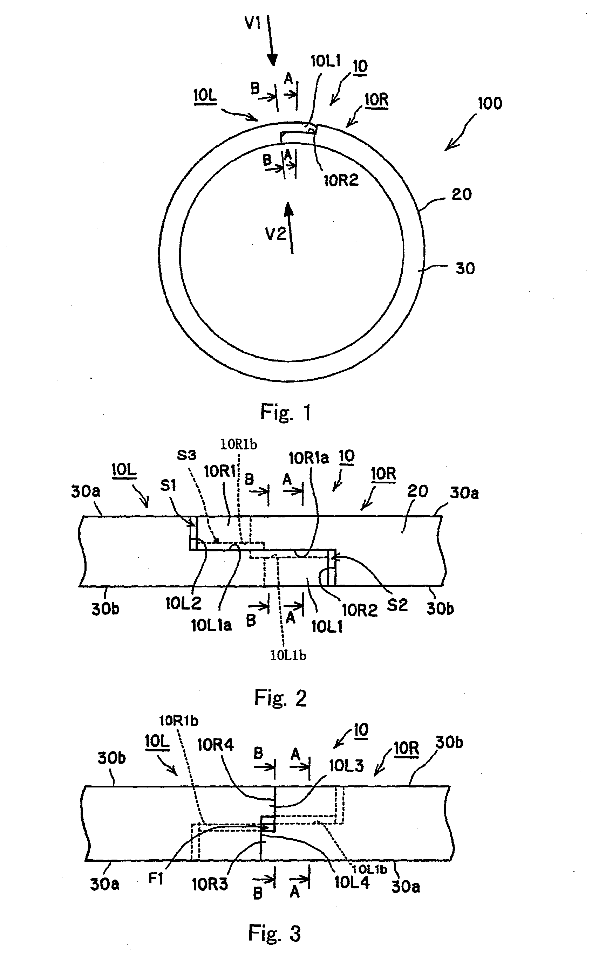

With reference to FIGS. 1 to 10, a seal ring according to the first embodiment of the invention will be described.

### <General Structure of the Seal Ring>

Referring particularly to FIG. 1, a general structure of the seal ring according to the first embodiment of the invention will be described. FIG. 1 is a side view of a seal ring according to the first embodiment of the invention.

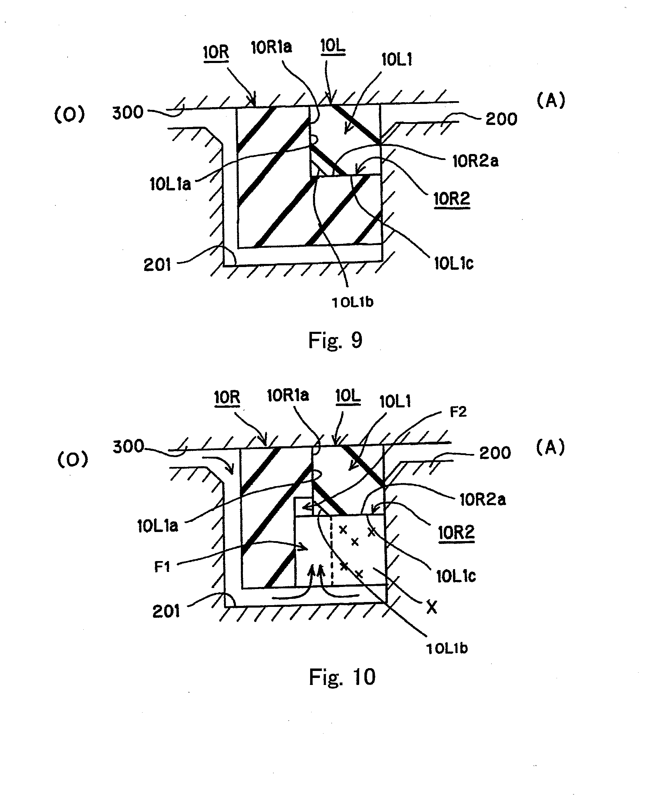

The seal ring 100 according to the embodiment is mounted in an annular groove 201 formed in a rotary shaft 200 inserted into a shaft hole in a housing 300. The seal ring 100 is in sliding contact with a side wall face on an unsealed fluid side (A) of the annular groove 201 and with an inner peripheral face of the shaft hole in the housing 300 to seal an annular space between the rotary shaft 200 and the shaft hole to thereby prevent leakage of oil that is a sealed fluid on a sealed fluid side (O) (FIGS. 9 and 10). The seal ring 100 according to the embodiment is made of resin material. However, the invention can be applied to seal rings made of other materials.

A ring main body of the seal ring 100 according to the embodiment is provided with a cut portion 10 where the ring main body is cut at one portion in a circumferential direction. In this way, the seal ring 100 can be mounted with its cut portion 10 opened up when it is mounted in the annular groove 201 and therefore, it is easy to mount the seal ring 100. In the following description, a right side of the cut portion 10 in the drawing is referred to as one cut end portion 10R and a left side of the cut portion is referred to as the other cut end portion 10L.

A side face 30 of the seal ring 100 according to the embodiment is provided with a notch portion 31 throughout a circumference. This is for reducing sliding resistance by reducing a sliding area on the side wall face on the unsealed fluid side (A) of the annular groove 201.

### <Details of the Cut Portion>

Referring particularly to FIGS. 2 to 7, the cut portion 10 of the seal ring 100 according to the first embodiment of the invention will be described more specifically.

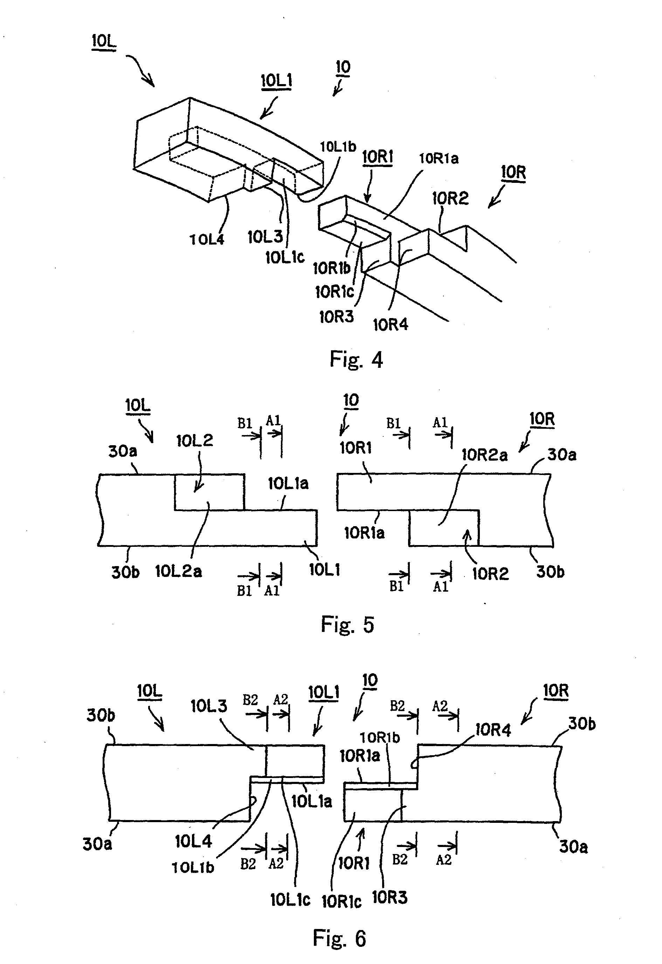

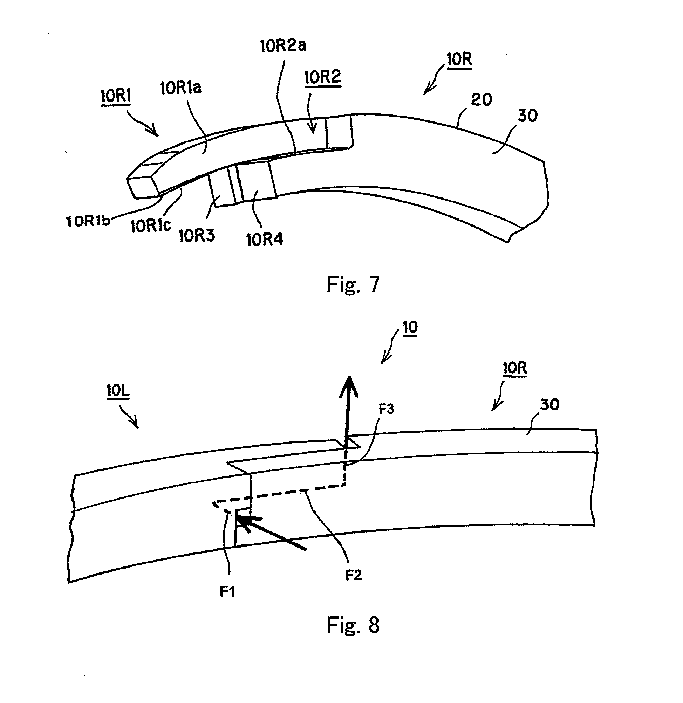

FIG. 2 is a view of an outer peripheral face side of the cut portion of the seal ring according to the first embodiment of the invention. FIG. 2 is a view in a direction of an arrow V1 in FIG. 1. FIG. 3 is a view of an inner peripheral face side of the cut portion of the seal ring according to the first embodiment of the invention. FIG. 3 is a view in a direction of an arrow V2 in FIG. 1. FIG. 4 is a side view showing a state in which the cut portion of the seal ring according to the first embodiment of the invention is opened up. FIG. 5 is a view of the outer peripheral face side in the state in which the cut portion of the seal ring according to the first embodiment of the invention is opened up. FIG. 6 is a view of the inner peripheral face side in the state in which the cut portion of the seal ring according to the first embodiment of the invention is opened up. FIG. 7 is a perspective view showing a cut end portion of the seal ring according to the first embodiment of the invention.

Here, for convenience of description, an upper side face 30 of the both side faces of the seal ring 100 in FIGS. 2 and 5 (a lower side face in FIGS. 3 and 6) will be referred to as one side face 30a and a lower side face 30 in FIGS. 2 and 5 (upper side face in FIGS. 3 and 6) will be referred to as the other side face 30b.

The one cut end portion 10R of the cut portion 10 according to the embodiment is provided, on the one side face 30a side on the outer peripheral side, with a first protruding portion 10R1 and is provided, on the other side face 30b side on the outer peripheral side, with a first recessed portion 10R2. The other cut end portion 10L of the cut portion 10 is provided, on the one side face 30a side on the outer peripheral side, with a second recessed portion 10L2 in which the first protruding portion 10R1 is fitted and is provided, on the other side face 30b side on the outer peripheral side, with a second protruding portion 10L1 to be fitted in the first recessed portion 10R2.

When the seal ring 100 is used, i.e., in a mounted state of the seal ring 100 in the annular groove 201, the first protruding portion 10R1 is fitted in the second recessed portion 10L2 and the second protruding portion 10L1 is fitted in the first recessed portion 10R2. In this state, an inner side face 10R1a of the first protruding portion 10R1 and an inner side face 10L1a of the second protruding portion 10L1 are in sliding contact with each other, an inner peripheral face 10R1c of the first protruding portion 10R1 and an outer peripheral face 10L2a of the second recessed portion 10L2 are in sliding contact with each other, and an inner peripheral face 10L1c of the second protruding portion 10L1 and an outer peripheral face 10R2a of the first recessed portion 10R2 are in sliding contact with each other, respectively. These contact portions sliding on each other form seal portions, respectively.

In the embodiment, even when tip end faces of the one cut end portion 10R and the other cut end portion 10L are in contact with each other, a first space S1 is formed so as to be secured on a tip end side of the first protruding portion 10R1 in the circumferential direction in a state in which the first protruding portion 10R1 is fitted in the second recessed portion 10L2 (see FIG. 2). Similarly, a second space S2 is formed so as to be secured on a tip end side of the second protruding portion 10L1 in the circumferential direction in a state in which the second protruding portion 10L1 is fitted in the first recessed portion 10R2 (see FIG. 2). In the embodiment, the tip end faces of the one cut end portion 10R and the other cut end portion 10L can be in contact with each other on the inner peripheral side.

In a fitted portion of the first protruding portion 10R1 fitted in the second recessed portion 10L2 and a fitted portion of the second protruding portion 10L1 fitted in the first recessed portion 10R2, an inter-side face leak passage S3 connecting the first space S1 open on one side face side and the second space S2 open on the other side face side is formed.

The inter-side face leak passage S3 is made up of a first chamfered portion 10R1b formed at an edge portion of the first protruding portion 10R1 corresponding to a corner portion of the second recessed portion 10L2 and extending in the circumferential direction and a second chamfered portion 10L1b formed at an edge portion of a second protruding portion 10L1 corresponding to a corner portion of the first recessed portion 10R2 and extending in the circumferential direction.

Here, the first chamfered portion 10R1b is formed at the edge portion between the inner side face 10R1a and the inner peripheral face 10R1c of the first protruding portion 10R1 and the second chamfered portion 10L1b is formed at the edge portion between the inner side face 10L1a and the inner peripheral face 10L1c of the second protruding portion 10L1.

The seal ring 100 according to the embodiment has an inversion-symmetric shape with respect to a center plane (plane passing through a center between the both side faces) in a width direction and the first chamfered portion 10R1b and the second chamfered portion 10L1b have the same structures.

In the embodiment, the one cut end portion 10R is provided, on the one side face 30a side on the inner peripheral side, with a third protruding portion 10R3 and the other cut end portion 10L is provided, on the other side face 30b side on the inner peripheral side, with a fourth protruding portion 10L3.

Here, if the environmental temperature is high and the circumferential length increases due to the linear expansion, the third protruding portion 10R3 can come in contact with an end face (end face on the inner peripheral side and on the one side face 30a side) of the other cut end portion 10L and the fourth protruding portion 10L3 can come in contact with an end face (end face on the inner peripheral side and on the other side face 30b side) of the one cut end portion 10R. In the embodiment, a space is still formed between the third protruding portion 10R3 and the fourth protruding portion 10L3 in this state. This space serves as a passage communicating with the inner peripheral face side of the seal ring 100 and with the inter-side face leak passage S3. This passage is a flow path F1 through which the sealed fluid flows.

### <Flow Path of Sealed Fluid>

Referring particularly to FIGS. 8 to 10, the flow path of the sealed fluid in the seal ring 100 according to the first embodiment of the invention will be described. FIG. 8 is a perspective view showing an area around the cut portion of the seal ring according to the first embodiment of the invention. FIGS. 9 and 10 are schematic sectional views showing a used state (mounted state) of the seal ring according to the first embodiment of the invention. The seal ring 100 in FIG. 9 corresponds to a sectional view along a line A-A in FIGS. 1 to 3, a sectional view along a line A1-A1 in FIG. 5, and a sectional view along a line A2-A2 in FIG. 6, respectively. The seal ring 100 in FIG. 10 corresponds to a sectional view along a line B-B in FIGS. 1 to 3, a sectional view along a line B1-B1 in FIG. 5, and a sectional view along a line B2-B2 in FIG. 6, respectively.

In the embodiment, the left side is the sealed fluid side (O) on which the sealed fluid (oil) is sealed and the right side is the unsealed fluid side (A) in FIGS. 9 and 10. Because the seal ring 100 according to the embodiment has the inversion-symmetric shape with respect to the center plane in the width direction as described above, the same operation and effects can be obtained, if the sealed fluid side (O) and the unsealed fluid side (A) are reversed. A mounted orientation of the seal ring 100 does not matter, either.

In FIG. 8, the flow path of the sealed fluid is shown by arrows, when the peripheral tip ends of the cut end portions are in contact with each other (i.e., when the third protruding portion 10R3 is in contact with the end face of the other cut end portion 10L and the fourth protruding portion 10L3 is in contact with the end face of the one cut end portion 10R as described above).

In this manner, in the embodiment, the sealed fluid enters the seal ring 100 from the inner peripheral face side of the seal ring 100 (the flow path Fl), flows in the circumferential direction (the flow path F2), and is discharged to the unsealed fluid side (A) (the flow path F3) in the state in which the peripheral tip ends of the cut end portions are in contact with each other.

Here, the flow path F1 is made up of a space formed between the third protruding portion 10R3 and the fourth protruding portion 10L3 as described above. FIG. 10 shows a portion where the flow path F1 is formed. In FIG. 10, an area X shown with marks x is an area with which the fourth protruding portion 10L3 provided to the other cut end portion 10L is in contact.

The flow path F2 is made up of the first chamfered portion 10R1b or the second chamfered portion 10L1b. The first chamfered portion 10R1b serves as the flow path F2 when the above-described one side face 30a is used as the sliding face and the second chamfered portion 10L1b serves as the flow path F2 when the other side face 30b is used as the sliding face. FIG. 9 shows a portion where the flow path F2 is formed.

The flow path F3 is made up of the first space S1 or the second space S2. The first space S1 serves as the flow path F3 when the above-described one side face 30a is used as the sliding face and the second space S2 serves as the flow path F3 when the other side face 30b is used as the sliding face.

As described above, with the seal ring 100 according to the embodiment, the flow path through which the sealed fluid flows (leaks) from the inner peripheral face side to the unsealed fluid side (A) of the seal ring 100 is formed even when the peripheral tip ends of the cut end portions are in contact with each other.

### <Advantages of the Embodiment>

As described above, with the seal ring 100 according to the embodiment, the flow path through which the sealed fluid flows (leaks) from the inner peripheral face side to the unsealed fluid side (A) of the seal ring 100 is formed even when the circumferential length increases due to the linear expansion and the peripheral tip ends of the cut end portions are in contact with each other.

In this way, it is possible to leak the sealed fluid near the sliding portion as compared with a case in which the sealed fluid leaks from the sealed fluid side (O) to the unsealed fluid side (A) and therefore, increase in temperature around the sliding portion can be suppressed. As a result, durability of the seal ring 100 can be improved.

Because the flow path F1 for the leak is secured on the inner peripheral side even when the peripheral tip ends of the cut end portions are in contact with each other in the embodiment, the peripheral tip ends of the cut end portions need not be designed so as not to come in contact with each other in consideration of the environmental temperature at which the seal ring is used and a linear expansion coefficient of the material. Therefore, the design flexibility is high.

In the seal ring 100 according to the embodiment, a sectional area of the flow path F2 hardly changes even if the circumferential length of the seal ring 100 changes due to the linear expansion. Therefore, it is possible to stabilize the amount of the leak by setting the sectional area of the flow path F2 to an area not larger than the smallest sectional areas of the flow path F1 and the flow path F3 (the sectional areas when the peripheral tip ends of the cut end portions are in contact with each other).

Moreover, the seal ring 100 according to the embodiment with its cut portion 10 opened up can be manufactured by using a metal mold which is opened in an axial direction. In other words, as can be seen from FIGS. 4 to 7, because there is no undercut portion in the axial direction in the opened up state of the cut portion 10, the seal ring 100 can be molded by using the metal mold.

### <Others>

In the embodiment, the third protruding portion 10R3 is formed at the one cut end portion 10R, the fourth protruding portion 10L3 is formed at the other cut end portion 10L, and the flow path F1 is made up of the space formed between the third protruding portion 10R3 and the fourth protruding portion 10L3.

However, it is needless to say that the flow path F1 can be formed even if the protruding portion is formed only at either one of the cut end portions.

### (Second embodiment)

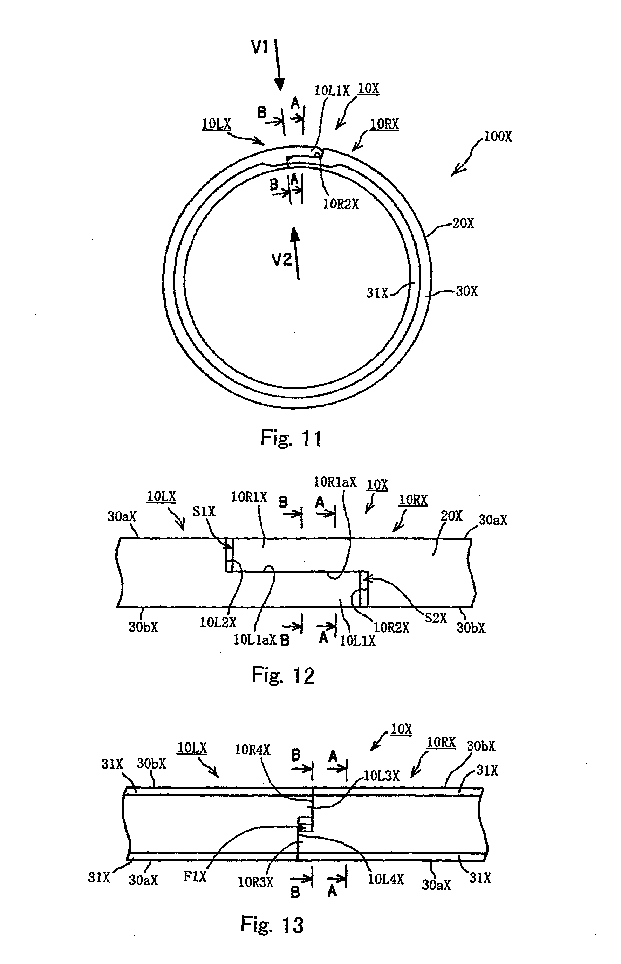

With reference to FIGS. 11 to 20, a seal ring according to a second embodiment of the invention will be described.

### <General Structure of the Seal Ring>

Referring particularly to FIG. 11, a general structure of the seal ring according to the second embodiment of the invention will be described. FIG. 11 is a side view of a seal ring according to the second embodiment of the invention.

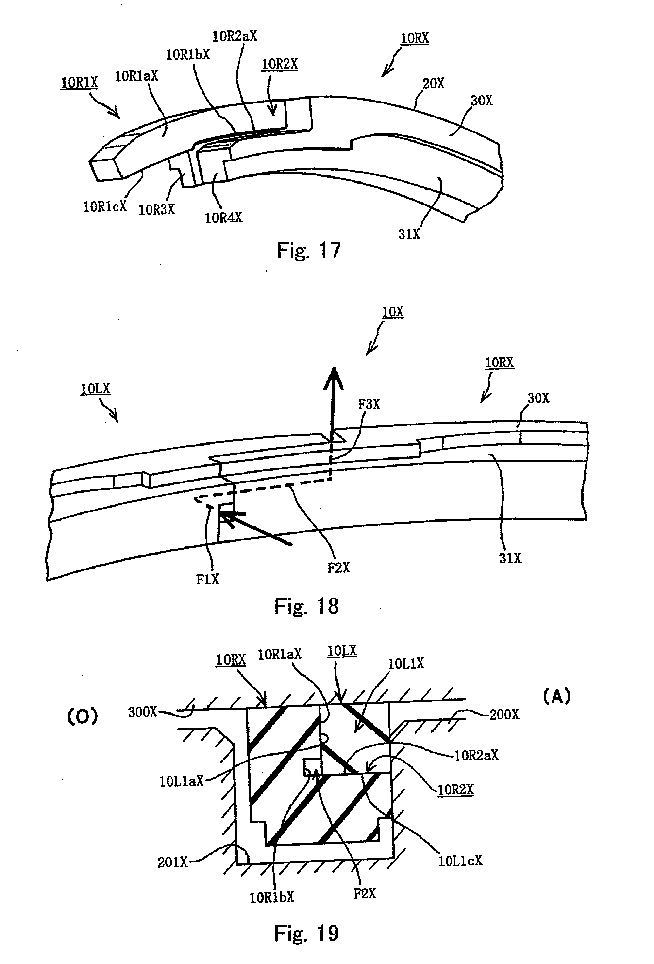

The seal ring 100X according to the embodiment is mounted in an annular groove 201X formed in a rotary shaft 200X inserted into a shaft hole in a housing 300X. The seal ring 100X comes into sliding contact with a side wall face on an unsealed fluid side (A) of the annular groove 201X and comes into contact with an inner peripheral face of the shaft hole in the housing 300 to seal an annular space between the rotary shaft 200X and the shaft hole to thereby prevent leakage of oil that is a sealed fluid on a sealed fluid side (O) (see FIGS. 19 and 20). The seal ring 100X according to the embodiment is made of resin material. However, the invention can be applied to seal rings made of other materials.

A ring main body of the seal ring 100X according to the embodiment is provided with a cut portion 10X where the ring main body is cut at one portion in a circumferential direction. In this way, the seal ring 100X can be mounted with its the cut portion 10X being opened up when it is mounted in the annular groove 201X and therefore, it is easy to mount the seal ring 100X. In the following description, a right side of the cut portion 10X in the drawing is referred to as one cut end portion 10RX and a left side of the cut portion is referred to as the other cut end portion 10LX.

A side face 30X of the seal ring 100X according to the embodiment is provided with a notch portion 31X throughout a circumference. This is for reducing sliding resistance by reducing a sliding area on the side wall face on the unsealed fluid side (A) of the annular groove 201X.

### <Details of the Cut Portion>

Referring particularly to FIGS. 12 to 17, the cut portion 10X of the seal ring 100X according to the second embodiment of the invention will be described more specifically.

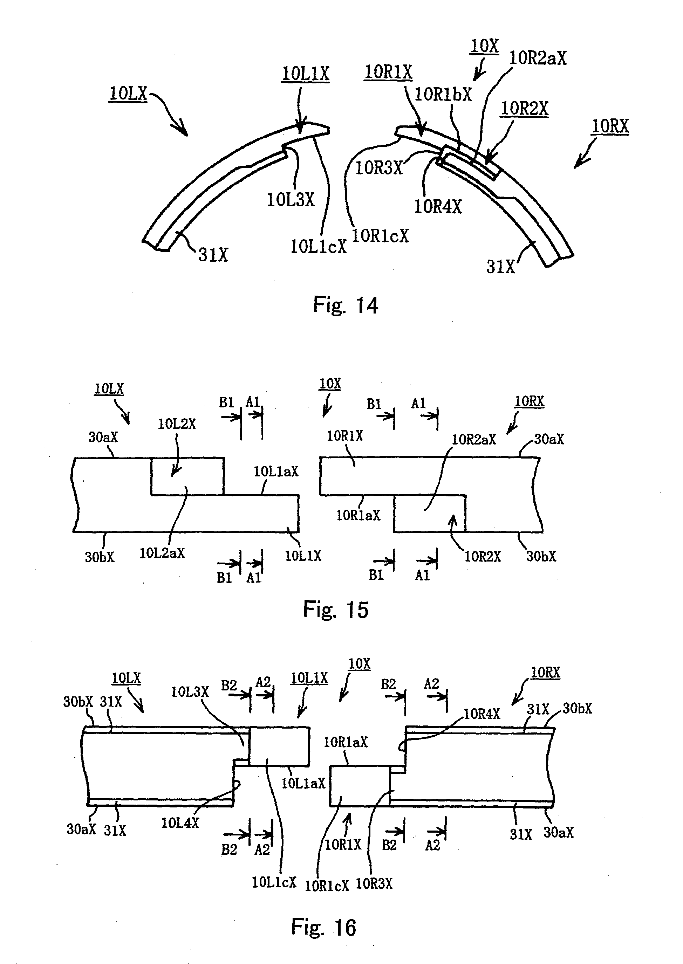

FIG. 12 is a view of an outer peripheral face side of the cut portion of the seal ring according to the second embodiment of the invention. FIG. 12 corresponds to a view in a direction of an arrow V1 in FIG. 11. FIG. 13 is a view of an inner peripheral face side of the cut portion of the seal ring according to the second embodiment of the invention. FIG. 13 corresponds to a view in a direction of an arrow V2 in FIG. 11. FIG. 14 is a side view showing a state in which the cut portion of the seal ring according to the second embodiment of the invention is opened up. FIG. 15 is a view of the outer peripheral face side in the state in which the cut portion of the seal ring according to the second embodiment of the invention is opened up. FIG. 16 is a view of the inner peripheral face side in the state in which the cut portion of the seal ring according to the second embodiment of the invention is opened up. FIG. 17 is a perspective view showing a cut end portion of the seal ring according to the second embodiment of the invention.

Here, for convenience of description, an upper side face 30X of the both side faces of the seal ring 100X in FIGS. 12 and 15 (a lower side face in FIGS. 13 and 16) will be referred to as one side face 30aX and a lower side face 30X in FIGS. 12 and 15 (an upper side face in FIGS. 13 and 16) will be referred to as the other side face 30bX.

The one cut end portion 10RX of the cut portion 10X according to the embodiment is provided, on the one side face 30aX side on the outer peripheral side, with a first protruding portion 10R1X and is provided, on the other side face 30bX side on the outer peripheral side, with a first recessed portion 10R2X. The other cut end portion 10LX of the cut portion 10X is provided, on the one side face 30aX side on the outer peripheral side, with a second recessed portion 10L2X in which the first protruding portion 10R1X is fitted and is provided, on the other side face 30bX side on the outer peripheral side, with a second protruding portion 10L1X to be fitted in the first recessed portion 10R2X.

When the seal ring 100X is used, i.e., in a mounted state of the seal ring 100X in the annular groove 201X, the first protruding portion 10R1X is fitted in the second recessed portion 10L2X and the second protruding portion 10L1X is fitted in the first recessed portion 10R2X. In this state, an inner side face 10R1aX of the first protruding portion 10R1X and an inner side face 10L1aX of the second protruding portion 10L1X are in sliding contact with each other, an inner peripheral face 10R1cX of the first protruding portion 10R1X and an outer peripheral face 10L2aX of the second recessed portion 10L2X are in sliding contact with each other, and an inner peripheral face 10L1cX of the second protruding portion 10L1X and an outer peripheral face 10R2aX of the first recessed portion 10R2X are in sliding contact with each other, respectively. These contact portions sliding on each other form seal portions, respectively.

In the embodiment, even when tip end faces of the one cut end portion 10RX and the other cut end portion 10LX are in contact with each other, a first space S1X is formed on a tip end side of the first protruding portion 10R1X in the circumferential direction in a state in which the first protruding portion 10R1X is fitted in the second recessed portion 10L2X (see FIG. 12). Similarly, a second space S2X is formed on a tip end side of the second protruding portion 10L1X in the circumferential direction in a state in which the second protruding portion 10L1X is fitted in the first recessed portion 10R2X (see FIG. 12). In the embodiment, the tip end faces of the one cut end portion 10RX and the other cut end portion 10LX are in contact with each other on the inner peripheral side.

In a vicinity of a corner portion of the first recessed portion 10R2X and extending in the circumferential direction, a first groove 10R1bX serving as a flow path of the sealed fluid and communicating with the second space S2X is formed. In a vicinity of a corner portion of the second recessed portion 10L2X and extending in the circumferential direction, a second groove serving as a flow path of the sealed fluid and communicating with the first space S1X is formed. The seal ring 100X according to the embodiment has an inversion-symmetric shape with respect to a center plane (plane passing through a center between the both side faces) in a width direction and the second groove and the first groove 10R1bX have the same structures. Therefore, the second groove is not especially shown.

Here, the first groove 10R1bX is formed in an inner side face 10R1aX of the first protruding portion 10R1X and the second groove is formed in the inner side face 10L1aX of the second protruding portion 10L1X.

The one cut end portion 10RX is provided, on the one side face 30aX side on the inner peripheral side, with a third protruding portion 10R3X and the other cut end portion 10LX is provided, on the other side face 30bX side on the inner peripheral side, with a fourth protruding portion 10L3X.

Here, if the environmental temperature is high and the circumferential length increases due to the linear expansion, the third protruding portion 10R3X can come in contact with an end face (end face on the inner peripheral side and on the one side face 30aX side) of the other cut end portion 10LX and the fourth protruding portion 10L3X can come in contact with an end face (end face on the inner peripheral side and on the other side face 30bX side) of the one cut end portion 10RX. In the embodiment, a space is still formed between the third protruding portion 10R3X and the fourth protruding portion 10L3X in this state. This space serves as a passage communicating with the inner peripheral face side of the seal ring 100X and with the first groove 10R1bX and the second groove. This passage is a flow path F1X through which the sealed fluid flows.

### <Flow Path of Sealed Fluid>

Referring particularly to FIGS. 18 to 20, the flow path of the sealed fluid in the seal ring 100X according to the second embodiment of the invention will be described. FIG. 18 is a perspective view showing an area around the cut portion of the seal ring according to the second embodiment of the invention. FIGS. 19 and 20 are schematic sectional views showing a used state (mounted state) of the seal ring according to the second embodiment of the invention. The seal ring 100 in FIG. 19 corresponds to a sectional view along a line A-A in FIGS. 11 to 13, a sectional view along a line A1-A1 in FIG. 15, and a sectional view along a line A2-A2 in FIG. 16, respectively. The seal ring 100X in FIG. 20 corresponds to a sectional view along a line B-B in FIGS. 11 to 13, a sectional view along a line B1-B1 in FIG. 15, and a sectional view along a line B2-B2 in FIG. 16, respectively.

In the embodiment, the left side is the sealed fluid side (O) on which the sealed fluid (oil) is sealed and the right side is the unsealed fluid side (A) in FIGS. 19 and 20. Because the seal ring 100X according to the embodiment has the inversion-symmetric shape with respect to the center plane in the width direction as described above, the same operation and effects can be obtained, if the sealed fluid side (O) and the unsealed fluid side (A) are reversed. A mounted orientation of the seal ring 100X does not matter, either.

In FIG. 18, the flow path of the sealed fluid is shown by arrows, when the peripheral tip ends of the cut end portions are in contact with each other (i.e., when the third protruding portion 10R3X is in contact with the end face of the other cut end portion 10LX and the fourth protruding portion 10L3X is in contact with the end face of the one cut end portion 10RX as described above).

In this manner, in the embodiment, the sealed fluid enters the seal ring 100X from the inner peripheral face side of the seal ring 100X (the flow path F1X), flows in the circumferential direction (the flow path F2X), and is discharged to the unsealed fluid side (A) (the flow path F3X) in the state in which the peripheral tip ends of the cut end portions are in contact with each other.

Here, the flow path F1X is made up of a space formed between the third protruding portion 10R3X and the fourth protruding portion 10L3X as described above. FIG. 20 shows a portion where the flow path F1X is formed. In FIG. 20, an area X shown with marks x is an area with which the fourth protruding portion 10L3X provided to the other cut end portion 10LX is in contact.

The flow path F2X is made up of the first groove 10R1bX or the second groove. The second groove serves as the flow path F2X when the above-described one side face 30aX is used as the sliding face and the first groove 10R1bX serves as the flow path F2X when the other side face 30bX is used as the sliding face. FIG. 20 shows a portion where the flow path F1X is formed.

The flow path F3X is made up of the first space S1X or the second space S2X. The first space S1X serves as the flow path F3X when the above-described one side face 30aX is used as the sliding face and the second space S2X serves as the flow path F3X when the other side face 30bX is used as the sliding face.

As described above, with the seal ring 100X according to the embodiment, the flow path through which the sealed fluid flows (leaks) from the inner peripheral face side to the unsealed fluid side (A) of the seal ring 100X is formed even when the peripheral tip ends of the cut end portions are in contact with each other.

### <Advantages of the Embodiment>

As described above, with the seal ring 100X according to the embodiment, the flow path through which the sealed fluid flows (leaks) from the inner peripheral face side to the unsealed fluid side (A) of the seal ring 100X is formed even when the circumferential length increases due to the linear expansion and the peripheral tip ends of the cut end portions are in contact with each other.

In this way, it is possible to leak the sealed fluid near the sliding portion as compared with a case in which the sealed fluid leaks from the sealed fluid side (O) to the unsealed fluid side (A) and therefore, increase in temperature around the sliding portion can be suppressed. As a result, durability of the seal ring 100X can be improved.

Because the flow path F1X is secured even when the peripheral tip ends of the cut end portions are in contact with each other in the embodiment, the peripheral tip ends of the cut end portions need not be designed so as not to come in contact with each other in consideration of the environmental temperature at which the seal ring is used and a linear expansion coefficient of the material. Therefore, the design flexibility is high.

Furthermore, the flow path F2X is made up of the grooves (the first groove 10R1bX and the second groove) formed in the recessed portions in the embodiment. Therefore, it is possible to suppress reduction in strength as compared with a case in which the flow path F2X is made up of a notch provided to a portion such as a protruding portion having a smaller sectional area than other portions. Therefore, it is possible to suppress the reduction in the strength as compared with the first embodiment.

In the seal ring 100X according to the embodiment, a sectional area of the flow path F2X (i.e., sectional areas of the first groove 10R1bX and the second groove) hardly changes even if the circumferential length of the seal ring 100X changes due to the linear expansion. Therefore, it is possible to stabilize the amount of the leak by setting the sectional area of the flow path F2X to an area not larger than the smallest sectional areas of the flow path F1X and the flow path F3X (the sectional areas when the peripheral tip ends of the cut end portions are in contact with each other).

Moreover, the seal ring 100X according to the embodiment with its cut portion 10X opened up can be manufactured by using a metal mold which is opened in an axial direction. In other words, as can be seen from FIGS. 14 to 17, because there is no undercut portion in the axial direction in the opened-up state of the cut portion 10X, the seal ring 100X can be molded by using the metal mold.

### <Others>

In the embodiment, the third protruding portion 10R3X is formed at the one cut end portion 10RX, the fourth protruding portion 10L3X is formed at the other cut end portion 10LX, and the flow path F1X is made up of the space formed between the third protruding portion 10R3X and the fourth protruding portion 10L3X.

However, it is needless to say that the flow path F1X can be formed even if the protruding portion is formed only at either one of the cut end portions.

### EXPLANATION OF REFERENCE NUMERALS

- 100, 100X: seal ring
- 10, 10X: cut portion
- 10R, 10RX: one cut end portion
- 10L, 10LX: the other cut end portion
- 10R1, 10R1X: first protruding portion
- 10L1, 10L1X: second protruding portion
- 10R1a, 10R1aX: inner side face
- 10L1a, 10L1aX: inner side face
- 10R1b: first chamfered portion
- 10R1bX: first groove
- 10L1b: second chamfered portion
- 10R1c, 10R1cX: inner peripheral face
- 10L1c, 10L1cX: inner peripheral face
- 10R2, 10R2X: first recessed portion
- 10L2, 10L2X: second recessed portion
- 10R2a, 10R2aX: outer peripheral face
- 10L2a, 10L2aX: outer peripheral face
- 10R3, 10R3X: third protruding portion
- 10R4, 10R4X: fourth protruding portion
- 30, 30X: side face
- 30a, 30aX: one side face
- 30b, 30bX: the other side face
- 31, 31X: notch portion
- 200, 200X: rotary shaft
- 201, 201X: annular groove
- 300, 300X: housing
- F1, F1X: first flow path
- F2, F2X: second flow path
- F3, F3X: third flow path
- S1, S1X: first space
- S2, S2X: second space
- S3, S3X: inter-side face leak passage

## Claims

1. A seal ring mounted in an annular groove provided to a rotary shaft inserted into a shaft hole in a housing, coming in sliding contact with a side wall face on an unsealed fluid side of the annular groove, and coming in contact with an inner peripheral face of the shaft hole to seal an annular space between the rotary shaft and the shaft hole,
a ring main body being provided with a cut portion where the ring main body is cut at a portion in a circumferential direction,
one cut end portion of the cut portion being provided, on a one side face side on an outer peripheral side, with a first protruding portion and being provided, on the other side face side on the outer peripheral side, with a first recessed portion,
the other cut end portion of the cut portion being provided, on the one side face side on the outer peripheral side, with a second recessed portion in which the first protruding portion is fitted and being provided, on the other side face side on the outer peripheral side, with a second protruding portion to be fitted in the first recessed portion,
a first space serving as a flow path of a sealed fluid being secured on a tip end side in the circumferential direction of the first protruding portion when the first protruding portion is fitted in the second recessed portion, a second space serving as a flow path of the sealed fluid being secured on a tip end side in the circumferential direction of the second protruding portion when the second protruding portion is fitted in the first recessed portion, and
an inter-side face leak passage connecting the first space and the second space being provided to a fitted portion of the first protruding portion fitted in the second recessed portion and a fitted portion of the second protruding portion fitted in the first recessed portion,
wherein a passage communicating with an inner peripheral face side and with the inter-side face leak passage is formed when an end portion on an inner peripheral side of the one cut end portion and an end portion on the inner peripheral side of the other cut end portion are in contact with each other.

2. A seal ring according to claim 1,
wherein the one cut end portion is provided, on the one side face side on the inner peripheral side, with a third protruding portion, the other cut end portion is provided, on the other side face side on the inner peripheral side, with a fourth protruding portion, and
a space is formed between the third protruding portion and the fourth protruding portion when the third protruding portion is in contact with an end face of the other cut end portion and the fourth protruding portion is in contact with an end face of the one cut end portion to thereby serve the space as a passage communicating with the inter-side face leak passage.

3. A seal ring according to claim 1 or 2, wherein the inter-side face leak passage is made up of a first chamfered portion formed at an edge portion of the first protruding portion corresponding to a corner portion of the second recessed portion and extending in the circumferential direction and a second chamfered portion formed at an edge portion of the second protruding portion corresponding to a corner portion of the first recessed portion and extending in the circumferential direction.

4. A seal ring mounted in an annular groove provided to a rotary shaft inserted into a shaft hole in a housing, coming in sliding contact with a side wall face on an unsealed fluid side of the annular groove, and coming in contact with an inner peripheral face of the shaft hole to seal an annular space between the rotary shaft and the shaft hole,
a ring main body being provided with a cut portion where the ring main body is cut at a portion in a circumferential direction,
one cut end portion of the cut portion being provided, on a one side face side on an outer peripheral side, with a first protruding portion and being provided, on the other side face side on the outer peripheral side, with a first recessed portion,
the other cut end portion of the cut portion being provided, on the one side face side on the outer peripheral side, with a second recessed portion in which the first protruding portion is fitted and being provided, on the other side face side on the outer peripheral side, with a second protruding portion to be fitted in the first recessed portion,
a first space serving as a flow path of a sealed fluid being secured on a tip end side in the circumferential direction of the first protruding portion when the first protruding portion is fitted in the second recessed portion, a second space serving as a flow path of the sealed fluid being secured on a tip end side in the circumferential direction of the second protruding portion when the second protruding portion is fitted in the first recessed portion,
a first groove serving as a flow path of the sealed fluid and communicating with the second space is provided in a vicinity of a corner portion of the first recessed portion and extending in the circumferential direction, and a second groove serving as a flow path of the sealed fluid and communicating with the first space is provided in a vicinity of a corner portion of the second recessed portion and extending in the circumferential direction,
wherein a passage communicating with an inner peripheral face side and with the first groove and the second groove is formed when an end portion on an inner peripheral side of the one cut end portion and an end portion on the inner peripheral side of the other cut end portion are in contact with each other.

5. A seal ring according to claim 4, wherein the one cut end portion is provided, on the one side face side on the inner peripheral side, with a third protruding portion, the other cut end portion is provided, on the other side face side on the inner peripheral side, with a fourth protruding portion, and
a space is formed between the third protruding portion and the fourth protruding portion when the third protruding portion is in contact with an end face of the other cut end portion and the fourth protruding portion is in contact with an end face of the one cut end portion to thereby serve as a passage communicating with the first groove and the second groove.
